# EUROPEAN PATENT SPECIFICATION

(11) **EP 2 597 739 B1**
(45) Date of publication and mention of the grant of the patent: **07.05.2014**
(21) Application number: 11382361.1
(22) Date of filing: 24.11.2011
(51) Int. Cl.: H02G 3/04

(54) **Electromagnetic protection sleeve**
Elektromagnetische Schutzhülse
Manchon de protection électromagnétique

(43) Date of publication of application: 29.05.2013
(73) Proprietor: Relats, S.A., 08140 Caldes de Montbui (ES)
(72) Inventor: Relats Casas, Pere, 08140 Caldes De Montbui (ES); Relats Torante, Oriol, 08140 Caldes De Montbui (ES); Fruns Martin, Anna, 08140 Caldes De Montbui (ES); Martinez Algarra, Josep Ramon, 08140 Caldes De Montbui (ES); Relats Manent , Jordi, 08140 Caldes De Montbui (ES); Calderon Oliveras, Enric, 08302 Mataro (ES); Planaguma Vila, Jordi, 08302 Mataro (ES)
(74) Representative: Oficina Ponti, SLP

(56) References cited:
- FR-A1- 2 793 354
- FR-A1- 2 853 148

## Description

The present invention refers to an electromagnetic protective sleeve, specially designed for protecting cables for the aeronautic, railway and automobile industry.

### BACKGROUND OF THE INVENTION

To protect substrates, e.g. cables, in automobiles, airplanes or trains, usually are used textile protective sleeves.

These textile sleeves permit to obtain a mechanical and thermal protection by the combination of different kinds of plastic material yarns.

Further to the mechanical and thermal protection, when a cable through which an electrical current passes must be protected, it is also necessary to obtain electromagnetic protection.

To achieve this electromagnetic protection it is known to include conducting yarn in the structure of the sleeve, particularly made from metal, that in combination with the plastic material yarns, provide the suitable mechanical and electromagnetic protection, such as in FR 2 853 148 or FR 2 793 354.

Furthermore, some of these currently known sleeves are longitudinally opened to make easier their placement around the cables to be protected. These protective sleeves, even though are longitudinally opened, are elastic and return back to their tubular shape automatically when they are in the rest position. Usually these longitudinally opened sleeves are known in the art as "wrap-around" or "self-closing".

One problem of these protective sleeves combining metallic conductive yarns and plastic material elastic yarns is that, on one hand, the metallic conductive yarns can damage the cables housed inside the sleeve and, on the other hand, these conductive yarns can be damaged by metallic pieces that are externally placed around the protective sleeve.

Therefore, the main objective of the protective sleeve of the present invention is to isolate as much as possible the metallic conductive yarn from the pieces external to the protective sleeve and from the cables or substrates housed inside the protective sleeve, or to obtain an easy connection of the electric conductive yarns of the sleeve of the present invention with external metallic elements, to obtain a suitable electromagnetic protection.

### DESCRIPTION OF THE INVENTION

With the protective sleeve of the invention said drawbacks can be solved, presenting other advantages that will be described.

The electromagnetic protective sleeve comprises first electric conductive yarns and second plastic material yarns, characterized in that said first and second yarns are organized by strata, comprising at least one stratum of first electric conductive yarns and at least a second stratum of second plastic material yarns, said first stratum being the external stratum and said second stratum being the internal stratum, or said first stratum being the internal stratum and said second stratum being the external stratum.

Advantageously, said first electric conductive yarns and/or said second plastic material yarns are monofilament or multifilament.

According to different embodiments, said second plastic material yarns are from polyphenylene sufide (PPS) and/or polyether ether ketone (PEEK), and said first electric conductive yarns are from nickel-plated copper, aluminium and/or tinned copper.

Preferably, said first monofilament electric conductive yarns have a diameter from 0.05 mm and 0.30 mm and/or said first multifilament electric conductive yarns have a title from 1.1 dTex and 1100 dTex, and said second monofilament plastic material yarns have a diameter from 0.10 mm and 0.50 mm and/or said second multifilament plastic material yarns have a title from 86 dTex and 2200 dTex.

According to different embodiments, said first electric conductive yarns form weft stitches on one, two, three or four needles, and/or chain and tricot on four needles and/or chain and weft on four needles, and said second monofilament plastic material yarns form chain and/or tricot stitches on four needles and/or weft on four needles, and/or chain and tricot on four needles, and said second multifilament plastic material yarns form chain and/or weft stitches on four needles.

The strata of the electromagnetic protective sleeve of the present invention have different configurations, such as:
- The external stratum is formed by said second plastic material yarns and internal stratum is formed by said first electric conductive yarns.
- A stratum formed by said first electric conductive yarns is placed between two strata formed by said second plastic material yarns.
- The internal stratum is formed by said second plastic material yarns and the external stratum is formed by said first electric conductive yarns.
- Two or more strata formed by said second plastic material yarns are placed in a consecutive way.
- Two or more strata formed by said first electric conductive yarns are placed in a consecutive way.

With the protective sleeve of the present invention the following main advantages are obtained:
- The electric conductive yarns are protected from metallic pieces placed near the protective sleeve of the present invention.
- Cables or substrates housed inside the protective sleeve can be protected from the metal electric conductive yarns.
- The electric conductive yarns can be also placed at the internal or external part of the protective sleeve of the present invention, to obtain an easy connection with the cables housed inside the protective sleeve or with external elements.

To obtain this protection, in the sleeve of the present invention the yarns are placed by strata, so that the stratum formed by electric conductive yarns is always surrounded by at least one external stratum and an internal stratum of plastic material yarns, or the strata of the electric conductive material, are placed at the internal or external part of the sleeve to permit a good connection, as desired.

Furthermore, said plastic material yarns also provide the desired mechanical resistance for the protective sleeve of the present invention.

### BRIEF DESCRIPTION OF THE DRAWINGS

For a better understanding of what has been described, some drawings are attached in which, diagrammatically and only as a non limitative example, some embodiments are shown.

In said drawings:

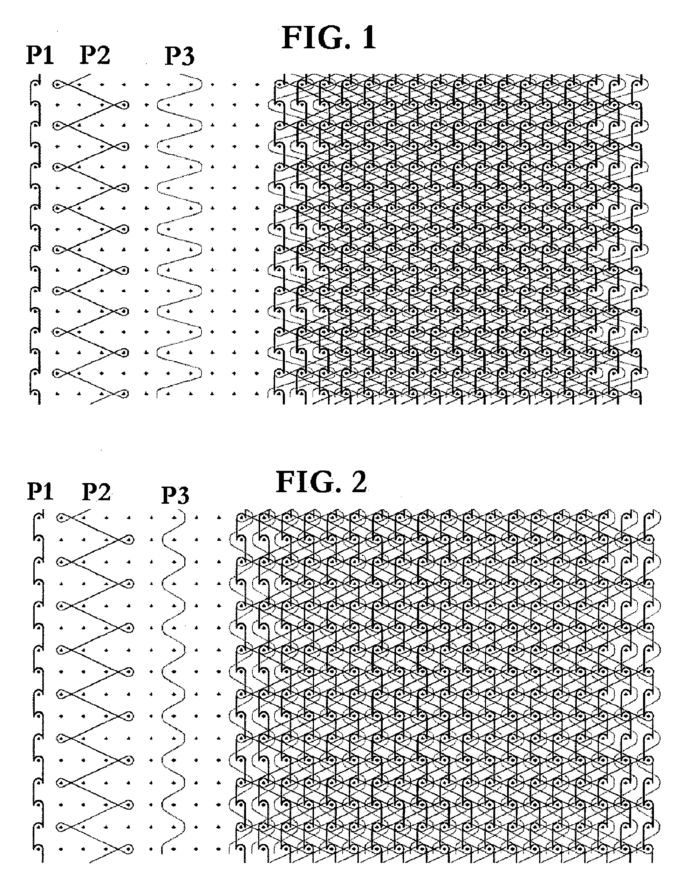

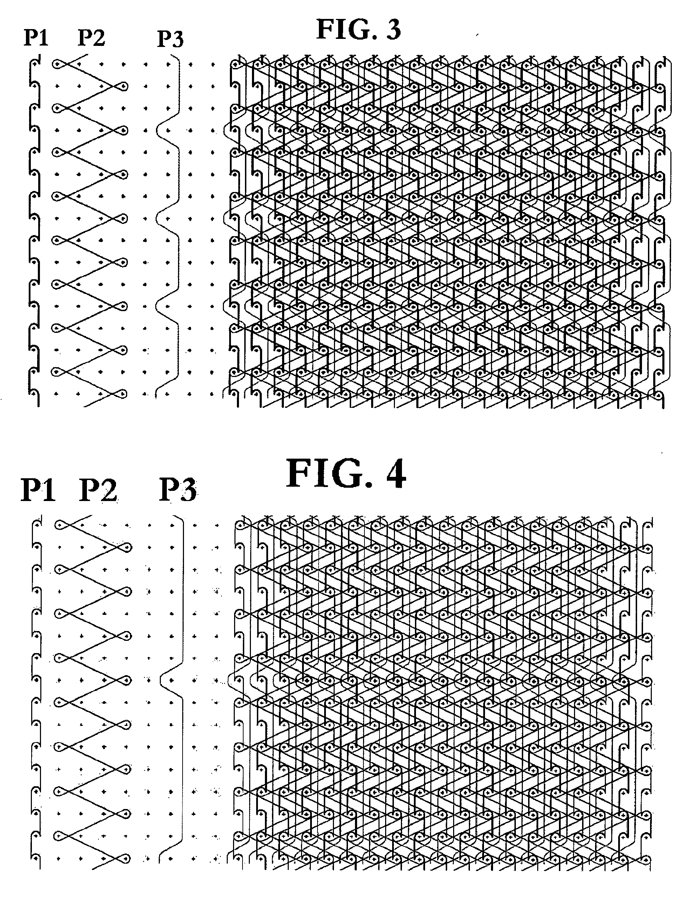

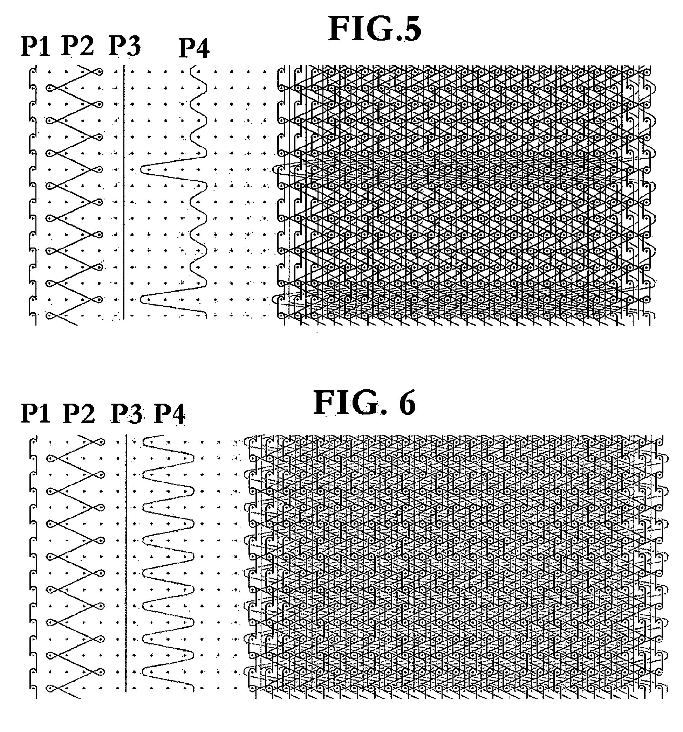

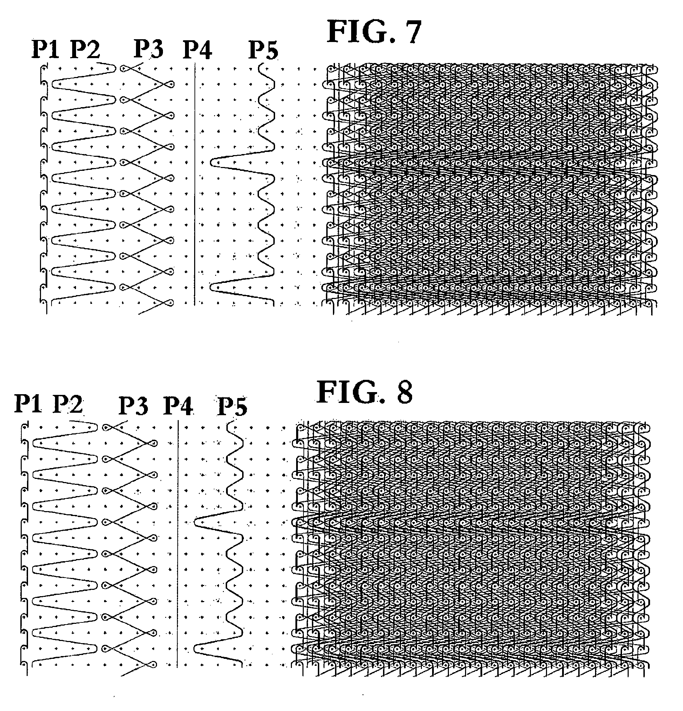

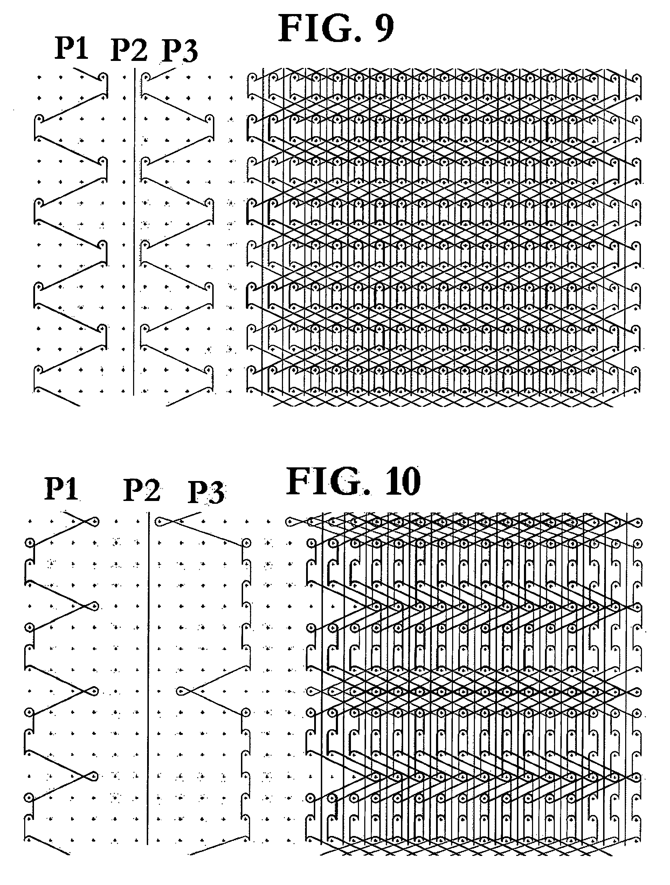

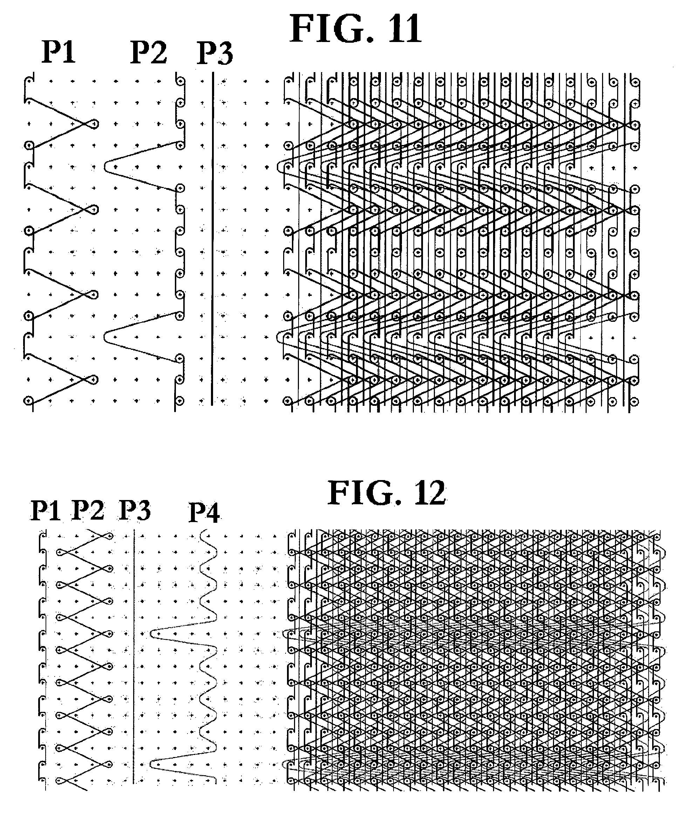

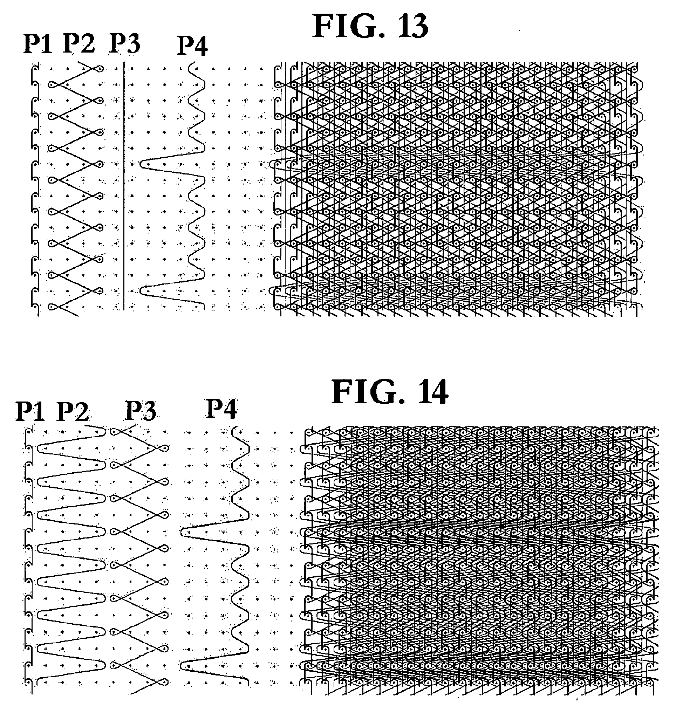

Figs. 1-14 show the schemes of the yarns forming the protective sleeve of the present invention, according to fourteen examples, numbered 1-14 in the attached table.

### DESCRIPTION OF THE PREFERRED EMBODIMENTS

Firstly, it must be pointed out that in the present description and in the claims, the term "stratum" must be interpreted as that the yarns are placed in different levels in the protective sleeve of the present invention.

The protective sleeve of the present invention is formed by first metallic electric conductive yarns and by second plastic material yarns, said first and second yarns being woven to each other.

The protective sleeve of the present invention is longitudinally opened, i.e. of "wrap-around" or "self-closing" kind, so that said longitudinal aperture permits an easy introduction of the cables to be protected inside the sleeve, and when it in a rest position, the sleeve turns back to its tubular configuration.

According to the some embodiments of the invention, said first and second yarns are placed by strata, so that it is defined an external stratum formed by plastic material yarns, an intermediate stratum formed by metal electric conductive yarns and an internal stratum formed by plastic material yarns.

Hereinafter some possible arrangements of said strata are described, according to alternative embodiments, the strata being cited in order from its external part to its internal part:
Embodiment 1:
   a) stratum of plastic material yarns;
   b) stratum of plastic material yarns;
   c) stratum of electric conducting yarns;
Embodiment 2:
   a) stratum of plastic material yarns;
   b) stratum of plastic material yarns;
   c) stratum of electric conductive yarns;
   d) stratum of plastic material yarns;
Embodiment 3:
   a) stratum of plastic material yarns;
   b) stratum of plastic material yarns;
   c) stratum of electric conductive yarns;
   d) stratum of electric conductive yarns;
Embodiment 4:
   a) stratum of plastic material yarns;
   b) stratum of plastic material yarns;
   c) stratum of plastic material yarns;
   d) stratum of electric conductive yarns;
   e) stratum of electric conductive yarns;
Embodiment 5:
   a) stratum of plastic material yarns;
   b) stratum of electric conductive yarns;
   c) stratum of plastic material yarns;
Embodiment 6:
   a) stratum of plastic material yarns;
   b) stratum of electric conductive yarns;
   c) stratum of electric conductive yarns;
Embodiment 7:
   a) stratum of electric conductive yarns;
   b) stratum of plastic material yarns;
   c) stratum of plastic material yarns;
Embodiment 8:
   a) stratum of electric conductive yarns;
   b) stratum of plastic material yarns;
   c) stratum of plastic material yarns;
   d) stratum of plastic material yarns;

### - Examples:

In the attached table fourteen examples of the protective sleeve of the present invention are provided. Each of these examples has been shown also in the attached drawings.

| EMBODIMENT | BINDINGS | | | | | MATERIALS | | | | |
|---|---|---|---|---|---|---|---|---|---|---|
| | P1 | P2 | P3 | P4 | P5 | P1 | P2 | P3 | P4 | P5 |
| 1 | Chain | Tricot on 4 needles | Weft on 2 needles | | | Monofilament PPS 0,18 mm | Monofilament PPS 0,18 mm | Monofilament nickel plated copper 0,15 mm | | |
| 2 | Chain | Tricot on 4 needles | Weft on 1 needle | | | Monofilament PPS 0,18 mm | Monofilament PEEK 0,18 mm | Monofilament nickel plated copper 0,15 mm | | |
| 3 | Chain | Tricot on 4 needles | Weft on 1 needle each 4 courses | | | Multifilament PEEK 334 dTex | Monofilament PPS 0,18 nun | Monofilament aluminium 0,10 mm | | |
| 4 | Chain | Tricot on 4 needles | Weft on 1 needle each 8 courses | | | Multifilament PPS 334 dTex | Monofilament PEEK 0,22 mm | Monofilament aluminium 0,10 mm | | |
| 5 | Chain | Tricot on 4 needles | Straight vertical weft | Alternate weft on 4 needles 1 yes 3 no | | Multifilament PEEK 334 dTex | Monofilament PPS 0,22 mm | Monofilament nickelplated copper 0,15 mm at 5 strands | Monofilament PPS 0,18 mm | |
| 6 | Chain | Tricot on 4 needles | Straight vertical weft | Weft on 3 needles | | Monofilament PPS 0,18 mm | Monofilament PPS 0,18 mm | Monofilament nickel-plated copper 0,25 mm at 3 strands | Monofilament nickel plated copper 0,15 mm | |
| 7 | Chain | Weft on 4 needles | Tricot on 4 needles | Straight vertical weft | Alternate weft on 4 needles 1 yes 3 no | Multifilament PEEK 334 dTex | Multifilament PES 550 dTex | Monofilament PEEK 0,18 mm | Monofilament nickel plated copper 0,15 mm at 5 strands | Monofilament nickel plated copper 0,15 mm |
| 8 | Chain | Weft on 4 needles | Tricot on 4 needles | Straight vertical weft | Alternate weft on 3 needles 1 yes 3 no | Monofilament PPS 0,18 mm | Monofilament PPS 0,18 mm | Monofilament PPS 0,18 mm | Monofilament aluminium 0,10 mm at 4 strands | Monofilament aluminium 0,10 mm |
| 9 | Alternate chain tricot on 4 needles | Straight vertical weft | Alternate Chain tricot on 4 needles | | | Monofilament PPS 0,18 mm | Monofilament nickel plated copper 0,25 mm at 3 strands | Monofilament PPS 0,18 mm | | |
| 10 | 3 chains and 1 tricot on 4 needles | Straight vertical weft | 7 chains and 1 tricot on 4 needles | | | Monofilament PEEK 0,22 mm | Monofilament aluminium 0,10 mm at 5 strands | Monofilament aluminium 0,10 mm | | |
| 11 | 3 chains and 1 tricot on 4 needles | Straight vertical weft | 7 chains and 1 weft on 4 needles | | | Monofilament PES 0,22 mm | Monofilament tinned copper 0,20 mm at 2 strands | Monofilament tinned copper 0,20 mm | | |
| 12 | Chain | Tricot on 4 needles | Weft on 4 alternate needles 1 yes 3 no | | | Monofilament nickel plated copper 0,15 mm at 5 strands | Monofilament PPS 0,22 mm | Monofilament PPS 0,18 mm | | |
| 13 | Chain | Tricot on 4 needles | Weft on 4 alternate needles 1 yes 3 no | | | Multifilament nickel plated copper 167 dTex/ Multifilament PEEK 334 dTex | Monofilament PEEK 0,18 mm | Monofilament PEEK 0,18 mm | | |
| 14 | Chain | Weft on 4 needles | Weft on 4 needles | Weft on 4 alternate needles 1 yes 3 no | | Monofilament nickel plated copper 167 dTex | Monofilament PES 0,22 mm | Monofilament PES 0,18 mm | Monofilament PEEK 0,18 mm | |

In this table and in the attached drawings, P1 means comb 1, P2 means comb 2, P3 means comb 3, P4 means comb 4 and P5 means comb 5.

Even though reference is made to several specific embodiments of the invention, it is clear for a person skilled in the art that the described protective sleeve is susceptible of several variations and modifications, and that all the details cited can be substituted by other technically equivalent ones, without departing from the scope of protection defined by the attached claims.

## Claims

1. Electromagnetic protective sleeve comprising first electric conductive yarns and second plastic material yarns, comprising at least a first woven stratum of first electric conducting yarns and at least a second woven stratum of second plastic material yarns, said first stratum being the external stratum and said second stratum being the internal stratum, or said first stratum being the internal stratum and said second stratum being the external stratum, **characterized in that** said first and second yarns are arranged as a single woven structure.

2. Electromagnetic protective sleeve according to claim 1, wherein said first electric conductive yarns and/or said second plastic material yarns are monofilament or multifilament.

3. Electromagnetic protective sleeve according to claim 1 or 2, wherein said second plastic material yarns are made from polyphenylene sufide (PPS) and/or polyether ether ketone (PEEK).

4. Electromagnetic protective sleeve according to claim 1 or 2, wherein said first electric conductive yarns are made from nickel-plate copper, aluminium and/or tinned copper.

5. Electromagnetic protective sleeve according to claim 2 or 4, wherein said first electric conductive yarns are monofilament having a diameter from 0.05 mm and 0.30 mm and/or said first electric conductive yarns are multifilament having a title from 1.1 dTex and 1100 dTex.

6. Electromagnetic protective sleeve according to claim 2 or 3, wherein said second plastic material yarns are monofilament having a diameter from 0.10 mm and 0.50 mm and/or said second plastic material yarns are multifilament having a title from 86 dTex and 2200 dTex.

7. Electromagnetic protective sleeve according to claim 2, wherein said first electric conductive yarns form weft stitches on one, two, three or four needles, and/or chain and tricot on four needles, and/or chain and weft on four needles.

8. Electromagnetic protective sleeve according to claim 2, wherein said second monofilament plastic material yarns form stitches of chain and/or tricot on four needles, and/or chain and tricot on four needles.

9. Electromagnetic protective sleeve according to claim 2, wherein said second multifilament plastic material yarns form chain and/or weft stitches on four needles.

10. Electromagnetic protective sleeve according to claim 1, wherein the external stratum is formed by said second plastic material yarns and the internal stratum is formed by said first electric conductive yarns.

11. Electromagnetic protective sleeve according to claim 1, wherein a stratum formed by said first electric conductive yarns is placed between two strata formed by said second plastic material yarns.

12. Electromagnetic protective sleeve according to claim 1, wherein the internal stratum is formed by said second plastic material yarns and the external stratum is formed by said first electric conductive yarns.

13. Electromagnetic protective sleeve according to claim 1, wherein two or more strata formed by said second plastic material yarns are placed in a consecutive way.

14. Electromagnetic protective sleeve according to claim 1, wherein two or more strata formed by said first electric conductive yarns are placed in a consecutive way.

## Patentansprüche

1. Elektromagnetischer Schutzschlauch mit ersten elektrisch leitfähigen Garnen und zweiten Plastikmaterialgarnen mit zumindest einem ersten gewebten Stratum der ersten elektrisch leitfähigen Garne und zumindest einem zweiten gewebten Stratum der zweiten Plastikmaterialgarne, wobei das erste Stratum das externe Stratum und das zweite Stratum das interne Stratum ist, oder wobei das erste Stratum das interne Stratum und das zweite Stratum das externe Stratum ist, **dadurch gekennzeichnet, dass** die ersten und zweiten Garne als eine Einzelwebstruktur angeordnet sind.

2. Elektromagnetischer Schutzschlauch nach Anspruch 1, wobei die ersten elektrisch leitfähigen Garne und/oder die zweiten Plastikmaterialgarne Monofilamente oder Multifilamente.

3. Elektromagnetischer Schutzschlauch nach Anspruch 1 oder 2, wobei die zweiten Plastikmaterialgarne aus Polyphenylensulfid (PPS) und/oder Polyetheretherketon (PEEK) hergestellt sind.

4. Elektromagnetischer Schutzschlauch nach Anspruch 1 oder 2, wobei die ersten elektrisch leitfähigen Garne aus Nickel plattiertem Kupfer, Aluminium und/oder verzinktem Kupfer hergestellt sind.

5. Elektromagnetsicher Schutzschlauch nach Anspruch 2 oder 4, wobei die ersten elektrisch leitfähigen Garne Monofilamente mit einem Durchmesser von 0,05 mm bis 0,3 mm und/oder die ersten elektrisch leitfähigen Garne Multifilamente mit einem Titel von 1,1 dTex bis 1100 dTex sind.

6. Elektromagnetischer Schutzschlauch nach Anspruch 2 oder 3, wobei die zweiten Plastikmaterialgarne Monofilamente mit einem Durchmesser von 0,1 mm bis 0,5 mm und/oder die zweiten Plastikmaterialgarne Multifilamente mit einem Titel von 68 dTex bis 2200 dTex sind.

7. Elektromagnetischer Schutzschlauch nach Anspruch 2, wobei die ersten elektrisch leitfähigen Garne durch Schussstiche auf einem, zwei, drei oder vier Nadeln und/oder eine Kette und Trikot auf vier Nadeln und/oder Kette und Durchschuss auf vier Nadeln sind.

8. Elektromagnetischer Schutzschlauch nach Anspruch 2, wobei die zweiten Monofilament Plastikmaterialgarne Stiche von einer Kette und/oder einem Trikot auf vier Nadeln und/oder einer Kette und einem Trikot auf vier Nadeln bilden.

9. Elektromagnetischer Schutzschlauch nach Anspruch 2, wobei die zweiten Multifilament Plastikmaterialgarne Ketten- und oder Durchschussstiche auf vier Nadeln bilden.

10. Elektromagnetischer Schutzschlauch nach Anspruch 1, wobei das externe Stratum durch die zweiten Plastikmaterialgarne und das interne Stratum durch die ersten elektrisch leitfähigen Garne gebildet ist.

11. Elektromagnetischer Schutzschlauch nach Anspruch 1, wobei ein durch die ersten elektrisch Leitfähigen Garne gebildete Stratum zwischen zwei Strata platziert ist, welche durch die zweiten plastikmateriale Garne gebildet sind.

12. Elektromagnetischer Schutzschlauch nach Anspruch 1, wobei das interne Stratum durch die zweiten Plastikmaterialgarne gebildet ist und das externe Stratum durch die ersten elektrisch leitfähigen Garne gebildet ist.

13. Elektromagnetischer Schutzschlauch nach Anspruch 1, wobei die zwei oder mehr Strata, welche durch die zweiten Plastikmaterialgarne gebildet sind, in aufeinander folgender Art platziert sind.

14. Elektromagnetischer Schutzschlauch nach Anspruch 1, wobei die zwei oder mehr Strata, welche durch die ersten elektrisch leitfähigen Garne gebildet sind, in aufeinander folgender Art platziert sind.

## Revendications

1. Manchon de protection électromagnétique comprenant des premiers fils conducteurs électriques et des seconds fils de matière plastique, comprenant au moins une première couche tissée de premiers fils conducteurs électriques et au moins une deuxième couche tissée de seconds fils de matière plastique, ladite première couche étant la couche extérieure et ladite deuxième couche étant la couche intérieure, ou ladite première couche étant la couche intérieure et ladite deuxième couche étant la couche extérieure, **caractérisé en ce que** lesdits premiers et seconds fils sont agencés sous la forme d'une seule structure tissée.

2. Manchon de protection électromagnétique selon la revendication 1, dans lequel lesdits premiers fils conducteurs électriques et/ou lesdits seconds fils de matière plastique sont à un seul filament ou à plusieurs filaments.

3. Manchon de protection électromagnétique selon les revendication 1 ou 2, dans lequel lesdits seconds fils de matière plastique sont réalisés à partir de sulfure de polyphénylène (PPS) et/ou de polyétheréthercétone (PEEK).

4. Manchon de protection électromagnétique selon les revendications 1 ou 2, dans lequel lesdits premiers fils conducteurs électriques sont réalisés à partir de cuivre nickelé, d'aluminium et/ou de cuivre étamé.

5. Manchon de protection électromagnétique selon les revendications 2 ou 4, dans lequel lesdits premiers fils conducteurs électriques sont à un seul filament qui présente un diamètre compris entre 0,05 mm et 0,30 mm, et/ou lesdits premiers fils conducteurs électriques sont à plusieurs filaments qui présentent un titre compris entre 1,1 dTex et 1 100 dTex.

6. Manchon de protection électromagnétique selon les revendications 2 ou 3, dans lequel lesdits seconds fils de matière plastique sont à un seul filament qui présente un diamètre compris entre 0,10 mm et 0,50 mm, et/ou lesdits seconds fils de matière plastique sont à plusieurs filaments qui présentent un titre compris entre 86 dTex et 2 200 dTex.

7. Manchon de protection électromagnétique selon la revendication 2, dans lequel lesdits premiers fils conducteurs électriques forment des points de trame sur une, deux, trois ou quatre aiguilles, et/ou de tricot chaîne sur quatre aiguilles, et/ou de trame chaîne sur quatre aiguilles.

8. Manchon de protection électromagnétique selon la revendication 2, dans lequel lesdits seconds fils de matière plastique à un seul filament forment des points de chaîne et/ou de tricot sur quatre aiguilles, et/ou de tricot chaîne sur quatre aiguilles.

9. Manchon de protection électromagnétique selon la revendication 2, dans lequel lesdits seconds fils de matière plastique à plusieurs filaments forment des points de chaîne et/ou de trame sur quatre aiguilles.

10. Manchon de protection électromagnétique selon la revendication 1, dans lequel la couche extérieure est formée par lesdits seconds fils de matière plastique et la couche intérieure est formée par lesdits premiers fils conducteurs électriques.

11. Manchon de protection électromagnétique selon la revendication 1, dans lequel une couche formée par lesdits premiers fils conducteurs électriques est placée entre deux couches formées par lesdits seconds fils de matière plastique.

12. Manchon de protection électromagnétique selon la revendication 1, dans lequel la couche intérieure est formée par lesdits seconds fils de matière plastique et la couche extérieure est formée par lesdits premiers fils conducteurs électriques.

13. Manchon de protection électromagnétique selon la revendication 1, dans lequel deux couches ou plus formées par lesdits seconds fils de matière plastique sont placées d'une manière consécutive.

14. Manchon de protection électromagnétique selon la revendication 1, dans lequel deux couches ou plus formées par lesdits premiers fils conducteurs électriques sont placées d'une manière consécutive.
